# EUROPEAN PATENT SPECIFICATION

(11) **EP 0 331 737 B1**
(45) Date of publication and mention of the grant of the patent: **05.06.1996**
(21) Application number: 88906911.8
(22) Date of filing: 08.08.1988
(51) Int. Cl.: G11B 11/10

(54) **PHOTOMAGNETIC RECORDING MEDIUM**
PHOTOMAGNETISCHES SPEICHERMEDIUM
SUPPORT D'ENREGISTREMENT PHOTOMAGNETIQUE

(30) Priority: 08.08.1987 JP 198713/87; 20.08.1987 JP 207629/87; 28.12.1987 JP 335554/87
(43) Date of publication of application: 13.09.1989
(73) Proprietor: MITSUI PETROCHEMICAL INDUSTRIES, LTD., Tokyo 100 (JP)
(72) Inventor: MIZUMOTO, Kunihiko, Ichihara-shi Chiba 299-01 (JP); HARUTA, Koichi, Ichihara-shi Chiba 299-01 (JP); KAJIURA, Hirokazu, Ichihara-shi Chiba 299-01 (JP); IGARASHI, Koichi, Ichihara-shi Chiba 299-01 (JP); HASHIMOTO, Hidehiko, Ichihara-shi Chiba 299-01 (JP)
(74) Representative: Cresswell, Thomas Anthony
(86) International application number: JP8800785
(87) International publication number: WO8901687

(56) References cited:
- EP-A- 0 128 960
- EP-A- 0 156 464
- EP-A- 0 192 256
- EP-A- 0 229 292
- EP-A- 0 310 680
- GB-A- 2 175 160
- JP-A- 6 252 744
- JP-A-61 117 749
- JP-A-61 194 664
- JP-A-61 255 546
- JP-A-62 132 254
- PATENT ABSTRACTS OF JAPAN vol. 12, no. 210 (P-717)(3057) 16 June 1988, & JP-A- 63 09040
- Abstract from JP-A-62-52744
- Journal of Applied Magnetism Society of Japan, Vol. 9, No. 2, pp.93-96
- Proceedings of The Nineth Conference of Applied Magnetism Society of Japan (November 1985)

## Description

### FIELD OF THE INVENTION

This invention relates to a magnetooptical recording medium having excellent resistance to oxidation and excellent magnetooptical recording characteristics. More particularly it relates to a magnetooptical recording medium comprising a substrate, a magnetooptical recording film and a reflection film, said films being laminated on said substrate in this order, having an easy axis of magnetization perpendicular to the film as well as excellent resistance to oxidation and excellent magnetooptical recording characteristics.

### BACKGROUND OF THE INVENTION

It is known that magnetooptical recording films comprising at least one transition metal such as iron, cobalt, etc., and at least one rare earth element such as terbium (Tb), gadolinium (Gd), etc., have an easy axis of magnetization perpendicular to the film and are capable of forming a small inverse magnetic domain with magnetization anti-parallel to the magnetization of the film. By corresponding the existence or nonexistence of this inverse magnetic domain to "1" or "0", it becomes possible to record a digital signal on such magnetooptical recording films as mentioned above.

As magnetooptical recording films composed of such transition metals and rare earth elements as mentioned above, there are disclosed those of Tb-Fe series containing 15-30 atom % of Tb, for example, in Japanese Patent Publication No. 20691/1982. There are also used magnetooptical recording films of Tb-Fe series to which a third component metal has been added. Furthermore, magnetooptical recording films of Tb-Co series, Tb-Fe-Co series and the like are known as well.

Though these magnetooptical recording films have excellent recording reproducing characteristics, they still involve such a serious problem from a practical standpoint that they are subject to oxidation in the course of ordinary use thereof and their characteristics tend to change with the lapse of time.

The mechanism of oxidation deterioration of magnetooptical recording films containing such transition metals and rare earth elements as mentioned above is discussed, for example, in Journal of the Society of Applied Magnetism of Japan, Vol.9, No.2, pp.93-96, and this paper reports that this mechanism of oxidative deterioration may be classified into three types as mentioned below.

### a) Pit corrosion

By pit corrosion is meant the occurrence of pinholes in the magnetooptical recording film. This corrosion proceeds mainly under the circumstances of high humidity, and it markedly proceeds, for example, in the recording films of such series as Tb-Fe, Tb-Co or the like.

### b) Surface oxidation

A surface oxide layer is formed on the magnetooptical recording film, whereby the Kerr-rotation angle θk of the film changes with time and eventually comes to decrease.

### c) Selective oxidation of rare earth element

Rare earth elements present in the magnetooptical recording film are selectively oxidized, thereby the coercive force Hc of the film comes to largely change with time.

Various attempts have heretofore been made to inhibit such oxidative deterioration of magnetooptical recording films as mentioned above. For instance, there is proposed a procedure in which a magnetooptical recording film is designed to have a three-layer structure wherein the film is sandwitched between anti-oxidizing protective layers such as those of Si₃N₄, SiO, SiO₂, AlN, etc. The anti-oxidizing protective layers as proposed above, however, involve such problems that they are relatively expensive and, at the same time, they require much time and labor to be formed on magnetooptical recording films, and that a sufficient inhibition of oxidative deterioration of the recording film is not always expected even when such anti-oxidizing protective layers are formed on said recording films.

Furthermore, various attempts are being made to improve resistance to oxidation of magnetooptical recording films by incorporating a third component metal into the recording films.

For instance, Journal of the Society of Applied Magnetism of Japan cited above discloses an attempt to improve resistance to oxidation of magnetooptical recording films of Tb-Fe or Tb-Co series by incorporation into the films of such third component metal as Co, Ni, Pt, Al, Cr, Ti and Pd in an amount of up to 3.5 atom %. In connection with the attempt, said Journal reports that the incorporation of small amounts of Co, Ni and Pt into Tb-Fe or Tb-Co is effective in inhibiting the surface oxidation and pit corrosion of the resulting magnetooptical recording film but has no effect on inhibition of the selective oxidation of Tb contained as a rare earth element in this magnetooptical recording film. This disclosure means that even if small amounts of Co, Ni and Pt are added to Tb-Fe or Tb-Co, Tb which is present in the resulting magnetooptical recording film is selectively oxidized, and the coercive force Hc of the film largely changes. Thus, even when small amounts up to 3.5 atom % of Co, Ni and Pt are added to Tb-Fe or Tb-Co, no sufficient improvement in resistance to oxidation of the resulting magnetooptical recording film is made.

With the view of improving resistance to oxidation of magnetooptical recording films, a teaching on the magnetooptical recording films which are obtained by adding Pt, Al, Cr and Ti in an amount up to 10 atom % by Tb-Fe or Tb-Fe-Co is disclosed on page 209 of the Proceedings of The Nineth Conference of the Society of Applied Magnetism of Japan (November 1985). Even when Pt, Al, Cr and Ti in an amount up to 10 atom % are added to Tb-Fe or Tb-Fe-Co, however, inhibition of selective oxidation of Tb present in the resulting magnetooptical recording films is not sufficient, though the surface oxidation and pit corrosion can be inhibited to a fairly effective extent. Thus, there has been still left such a problem that the coercive force Hc of the resultant magnetooptical recording films will largely change with time, and eventually the coercive force Hc will largely decreases.

Japanese Patent L-O-P Publn. No. 255546/1986 discloses a magnetooptical recording film comprising rare earth elements and transition metals which has been improved in resistance to oxidation by adding thereto such noble metal elements as Pt, Au, Ag, Ru, Rh, Pd, Os and Ir, within such a range that a Kerr-rotation angle necessary for regeneration of information recorded may be is retained.

Furthermore, Japanese Patent L-O-P Publn. No. 7806/1983 discloses a magnetooptical recording film comprising a polycrystalline thin film having a composition of PtCo in which Pt is contained in an amount of 10-30 atom %.

However, the above-mentioned polycrystalline thin film having this composition of PtCo involves such problems that said polycrystalline thin film as formed require heat treatment such as annealing because it is polycrystalline, that the polyrystalline grain boundaries frequently put out noise signals, and that it has a high Curie point.

As described above, the prior art magnetooptical recording films comprising Tb-Fe or Tb-Co and further incorporated with such third metal components as Co, Ni, Pt, Al, Cr, Ti and Pd, involve at least one of such problems that they are not sufficient in resistance to oxidation, small in C/N ratio and high in noise level, and that no high C/N ratio can be obtained unless a large bias magnetic field is applied (i.e. they are poor in bias magnetic field dependency).

GB-A-2175160 describes a magnetooptical recording medium comprising a magnetooptical recording film laminated on a substrate. The magnetooptical recording film comprises an amorphous rare earth element/3d transition metal alloy and has an easy axis of magnetization in a direction perpendicular to the film surface. The recording film also comprises at least one metal to suppress oxidation and corrosion.

EP-A-192256 describes a magnetooptical recording element including a reflective film made of an alloy containing aluminium and an element for lowering the coefficient of thermal conductivity of aluminium. A reduction in thermal conductivity of the reflective film is intended to improve recording sensitivity. The optimum alloy composition is stated to be an aluminium-nickel alloy containing approximately 2 to 10 atomic % nickel.

JP-A-62-52744 discloses a photomagnetic recording medium comprising a transparent substrate, reflection layer and recording layer. The reflection layer is interposed between the substrate and the recording layer.

EP-A-310680, in the name of the present applicants, describes a photomagnetic recording membrane containing (i) Pt and/or Pd, (ii) a rare earth element and (iii) Fe and/or Co. The Pt and/or Pd is present in an amount of 10 to 30 atom % and the Fe and/or Co in an amount of 40 to 70 atom %. The Co/(Fe + Co) atomic ratio is from 0 to 0.3. EP-A-310680 also describes magnetooptical recording media in which the recording membrane may be used. Certain of these include a reflection film which is stated to have a reflection index of at least 50%. EP-A-310680 is citable against the present application under Article 54(3) EPC.

The present invention seeks to provide a magnetooptical recording medium which has excellent oxidation resistance, is usable over a long period of time, has high C/N ratio and low in noise level and, moreover, is excellent in its bias magnetic field dependency such that a sufficiently high C/N ratio is obtained even in a small bias field.

The magnetooptical recording medium according to the invention comprises a substrate, a magnetooptical recording film (I) and a reflection film (II), said films being laminated on said substrate in this order, and an enhancing film between the substrate and the magnetooptical recording film (I) and/or between the magnetooptical recording film (I) and the reflection film (II), wherein the magnetooptical recording film (I) is a thin film of an amorphous alloy comprising (i) at least one 3d transition metal, (ii) from 5 to 30 atom % of at least one corrosion resistant metal and (iii) at least one rare earth element, and has an easy axis of magnetization perpendicular to the film plane;

the reflection film (II) comprises a metal or alloy having a thermal conductivity of not higher than 2 J/cm.sec.K.; the substrate comprises a random copolymer of ethylene and at least one cycloolefin of the general formula [I] or [II] 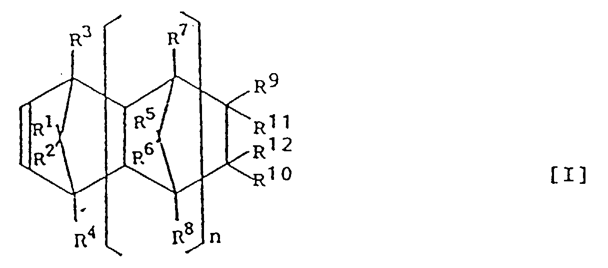 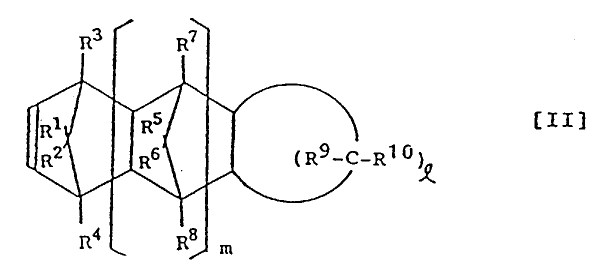 in which n and m each are 0 or a positive integer, ℓ is an integer of at least 3 and R¹ through R¹² each represents a hydrogen or halogen atom or a hydrocarbon group, the copolymer having an intrinsic viscosity [η] of from 0.05 to 10 dl/g, as measured in decalin at a temperature of 135°C, and a softening temperature of at least 70°C; and
wherein the enhancing film comprises ZnS, ZnSe, CdS, Si₃N₄, SiNₓ (wherein 0 < x < 4/3), Si₃N₄, Si or AlN

The magnetooptical recording medium set forth above wherein the reflection film (II) comprises a metal or alloy having a thermal conductivity of not higher 2 J/cm.sec.K. and a reflectance of at least 50 % is particularly preferred.

The magnetooptical recording medium according to the invention which comprises a substrate, a magnetooptical recording film (I) comprising a thin film of an amorphous alloy having a composition specified above and a reflection film (II) comprising a metal or alloy having a thermal conductivity of not higher than 2 J/cm.sec.K., said films being laminated on a substrate in this order, has an excellent resistance to oxidation, and in consequence, it is advantageous in that its magnetooptical recording film (I) can be thin; a warp of the medium and film crackings are not liable to occur; it has a high C/N ratio; in addition to excellent magnetooptical characteristics, its coercive force and Kerr-rotation angle do not substantially change with time; and it has an increased reflectance.

Fig. 1 is a diagrammatic, enlarged cross-sectional view of a magnetooptical recording medium according to one embodiment of the invention;
Fig. 2 is a similar view to Fig.1 illustrating a magnetooptical recording medium according to a further embodiment of the invention.
Fig. 3 is a graph showing the C/N ratio (dB) of a magnetooptical recording medium having a Ni Cr allow reflection film plotted against the Ni content of the reflection film.

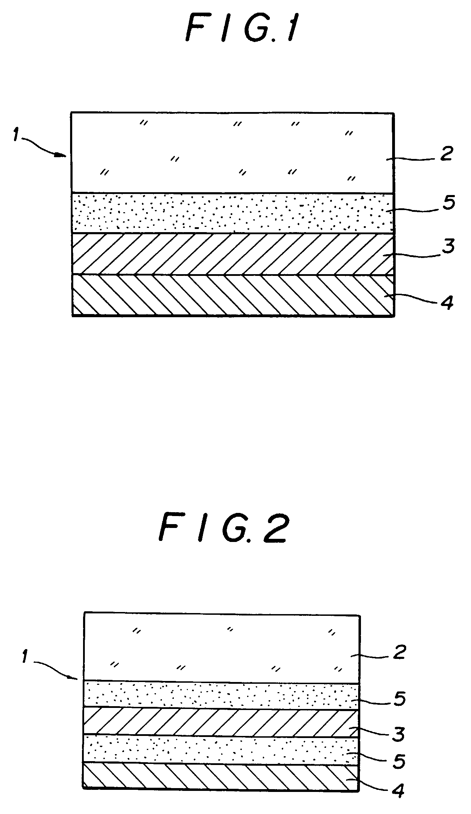

The magnetooptical recording medium 1 according to the invention may comprise an enhancing film 5 between the substrate 2 and the magnetooptical recording film 3, as shown in Fig. 1.

Further, as shown Fig. 2 the magnetooptical recording medium 1 according to the invention may comprise two enhancing films 5, one between the substrate 2 and the magnetooptical recording film 3 and the other between the magnetooptical recording film 3 and the reflection film 4.

In the substrate the polymer chain of the random copolymer, the component derived from the cycloolefins of the formulae [I] and [II] is present in the form of recurring units as represented by the following formulae [III] and [IV], respectively. 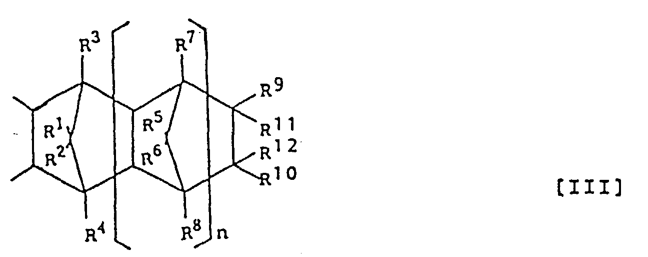 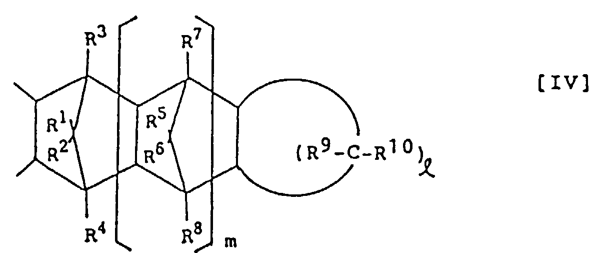 in which n, ℓ, R¹ and R¹² are as defined above.

At least one cycloolefin selected from unsaturated monomers represented by the formulae [I] and [II] is usable herein to copolymerize with ethylene. The cycloolefins represented by formula [I] can easily be prepared by condensation of cyclopentadienes with appropriate olefins by Diels-Alder reaction, and similarly the cycloolefins represented by the formula [II] can easily be prepared by condensation of cyclopentadienes with appropriate cycloolefins by Diels-Alder reaction.

Cycloolefins represented by formula [I] include such compounds as exemplified in Table 1 or, in addition to 1,4,5,8-dimethano-1,2,3,4,4a,5,8,8a-octahydronaphthalene, such octahydronaphthalenes as 2-methyl-1,4,5,8-dimethano-1,2,3,4,4a,5,8,8a-octahydronaphthalene, 2-ethyl-1,4,5,8-dimethano-1,2,3,4,4a,5,8,8a-octahydronaphthalene, 2-propyl-1,4,5,8-dimethano-1,2,3,4,4a,5,8,8a-octahydronaphthalene, 2-hexyl-1,4,5,8-dimethano-1,2,3,4,4a,5,8,8a-octahydronaphthalene, 2,3-dimethyl-1,4,5,8-dimethano-1,2,3,4,4a,5,8,8a-octahydronaphthalene, 2-methyl-3-ethyl-1,4,5,8-dimethano-1,2,3,4,4a,5,8,8a-octahydronaphthalene, 2-chloro-1,4,5,8-dimethano-1,2,3,4,4a,5,8,8a-octahydronaphthalene, 2-bromo-1,4,5,8-dimethano-1,2,3,4,4a,5,8,8a-octahydronaphthalene, 2-fluoro-1,4,5,8-dimethano-1,2,3,4,4a,8,8a-octahydronaphthalene, 2,3-dichloro-1,4,5,8-dimethano-1,2,3,4,4a,5,8,8a-octahydronaphthalene, 2-cyclohexyl-1,4,5,8-dimethano-1,2,3,4,4a,5,8,8a-octahydronaphthalene, 2-n-butyl-1,4,5,8-dimethano-1,2,3,4,4a,5,8,8a-octahydronaphthalene, 2-isobutyl-1,4,5,8-dimethano-1,2,3,4,4a,5,8,8a-octahydronaphthalene, and such compounds as exemplified in Table 2.

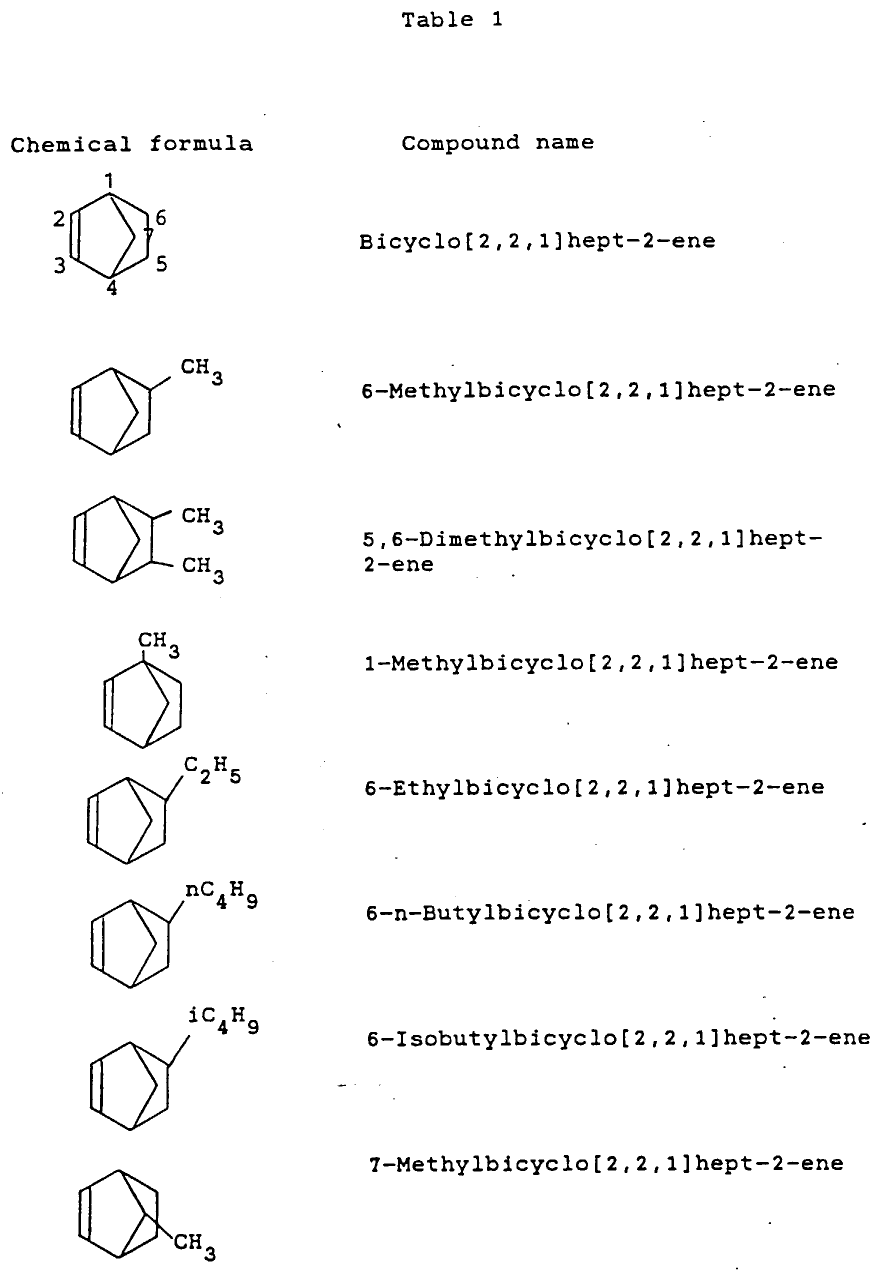

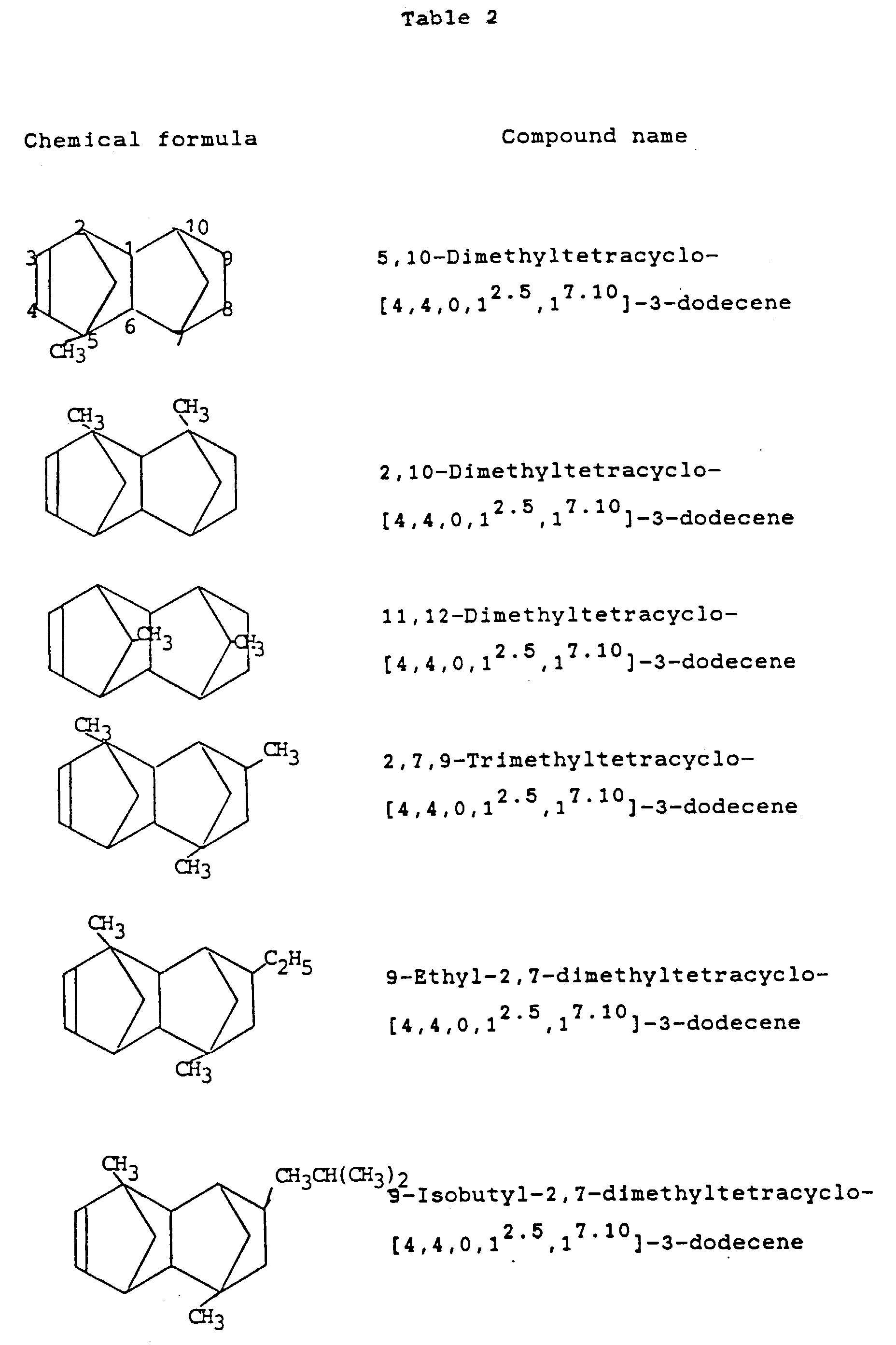

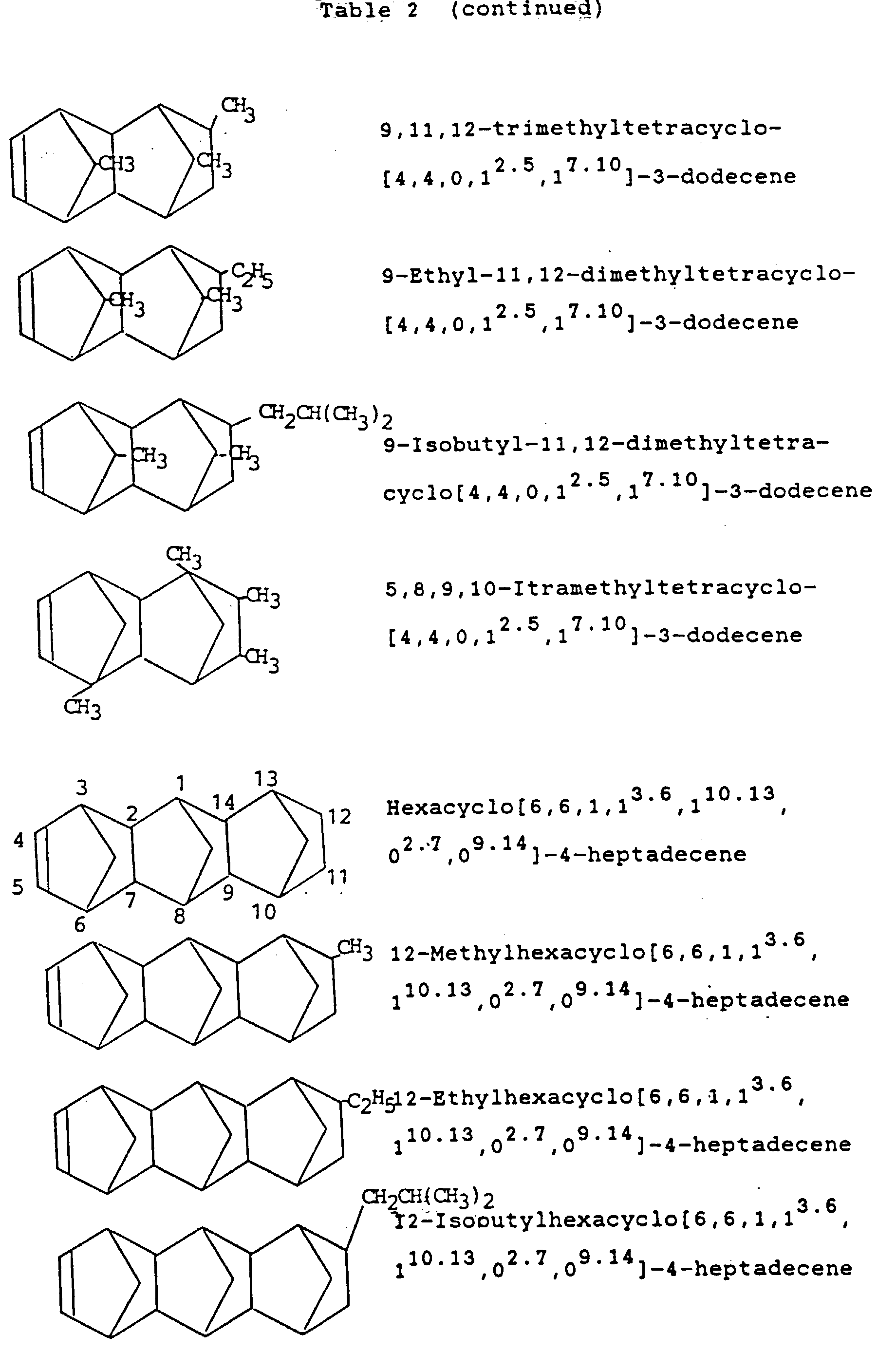

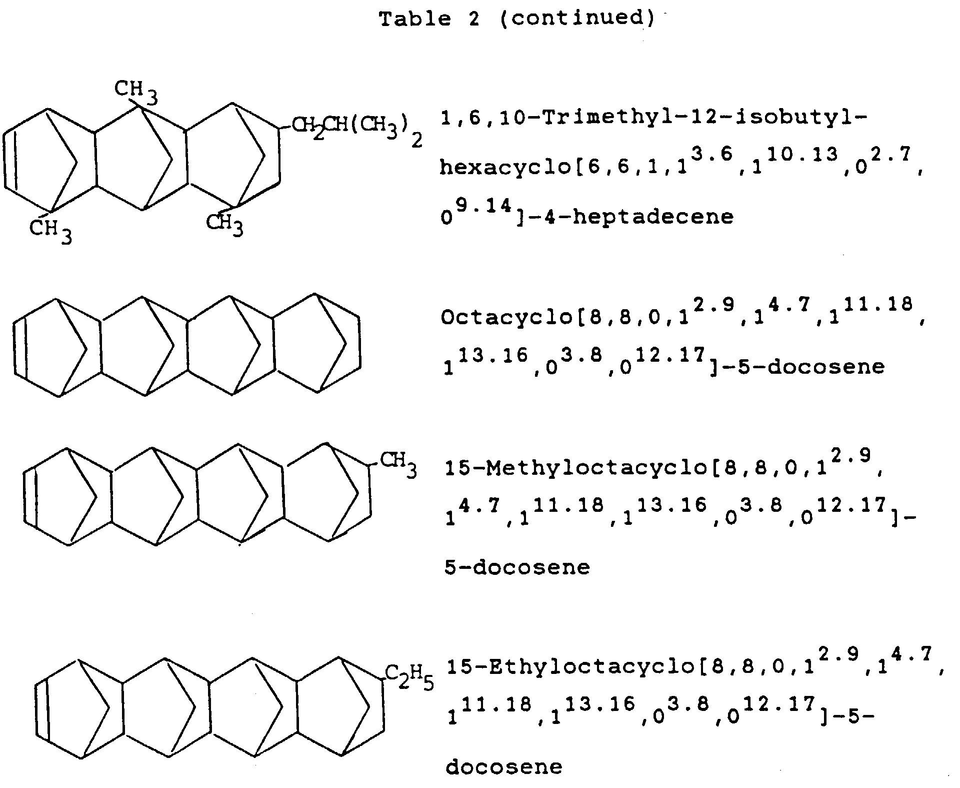

Cycloolefins represented by formula [II] include, for example, those exemplified in Tables 3 and 4.

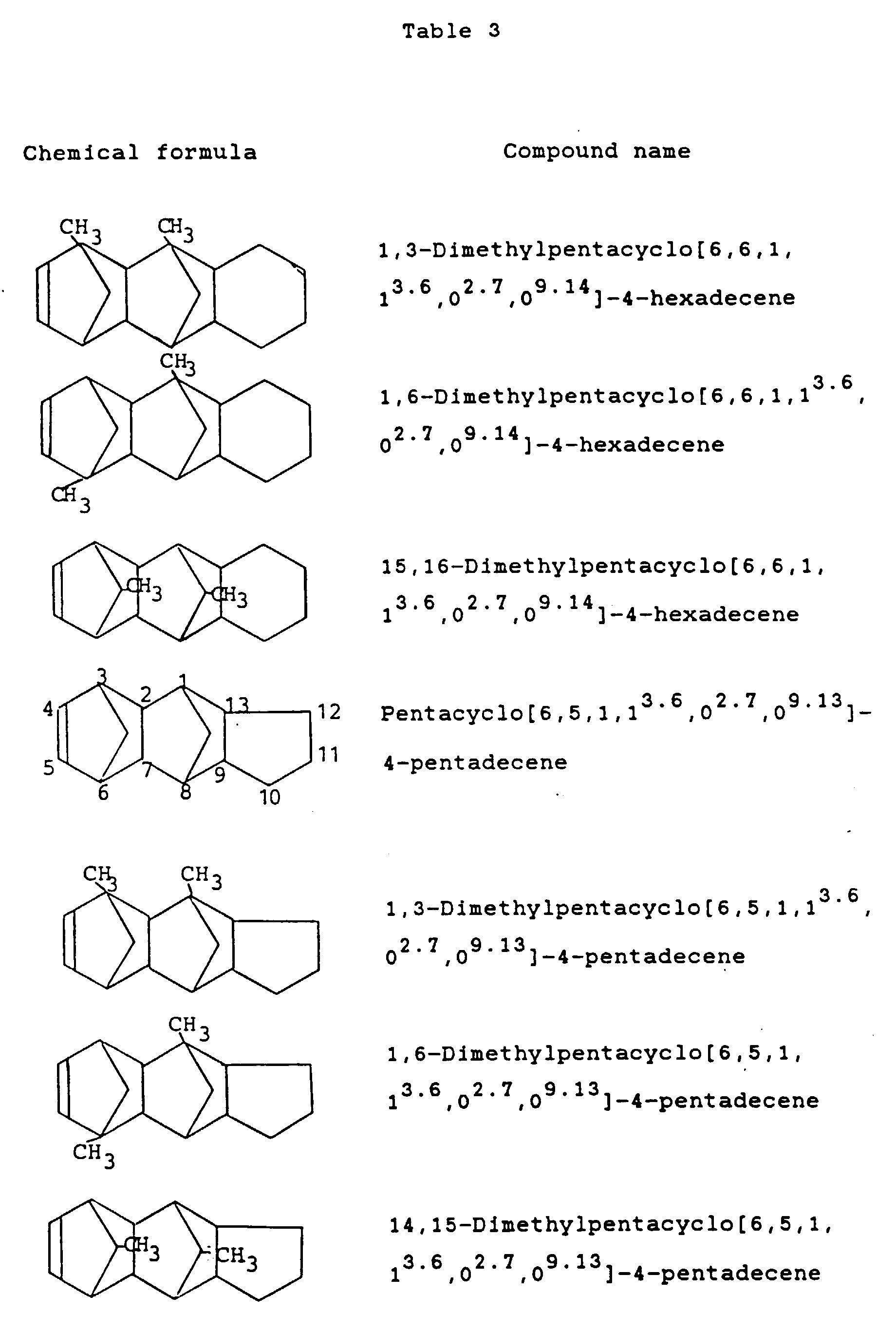

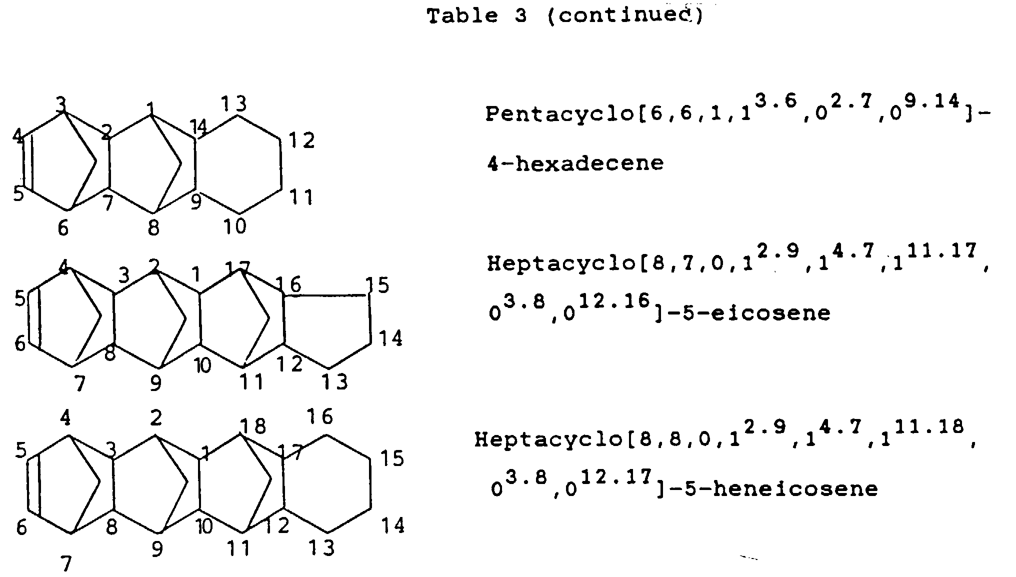

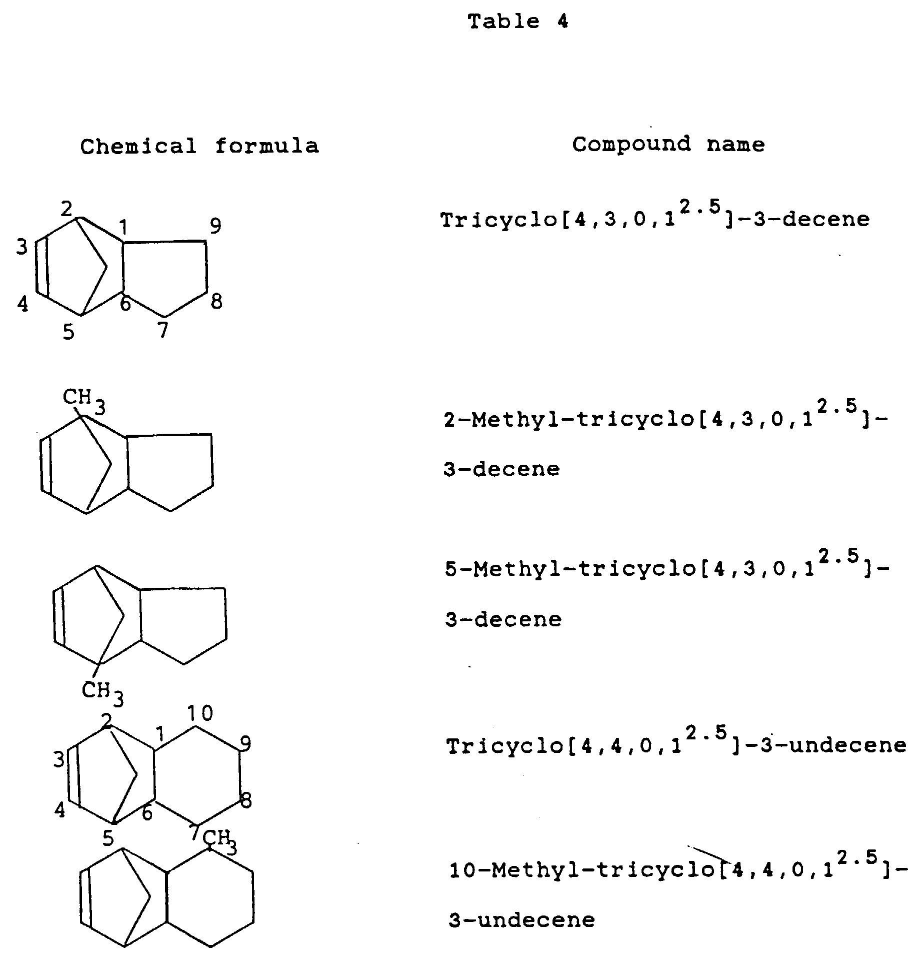

While the random copolymer comprises a first component derived from ethylene and a second component derived from at least one cycloolefin of the formula [I] or [II], as the essential constituent components, if desired, it may further comprise a third component derived from at least one other copolymerization monomer in an amount of up to an equimolar to that of the first component contained in the copolymer. Monomers which can be used to form the third component include, for example, alpha-olefins having from 3 to 20 carbons atoms such as propylene, 1-butene, 4-methyl-1-pentene, 1-hexene, 1-octene, 1-decene, 1-dodecene, 1-tetradecene, 1-hexadecene, 1-octadecene and 1-eicocene.

In the copolymer, the recurring units (a) derived from ethylene are typically present in an amount of from 40 to 85 % by mole, preferably from 50 to 75 % by mole, while the recurring units (b) of the formula [III] or [IV] derived from the cycloolefin or cycloolefins are typically present in an amount of from 15 to 60 % by mole, preferably from 25 to 50 % by mole, and these recurring units (a) and (b) are arranged in the copolymer substantially at random. The molar percentage of the recurring units (a) and (b) were determined by ¹³C-NMR. The fact that the copolymer is completely soluble in decalin at a temperature of 135°C., indicates that it is substantially linear and free from a gel-forming crosslinked structure.

The copolymer preferably has an intrinsic viscosity [η] from 0.08 to 5 dl/g, as measured in decalin at a temperature of 135 °C.

The softening temperature (TMA) of the copolymer, as measured by a thermal mechanical analyzer is generally at least 70°C., preferably from 90° to 250 °C., and more preferably from 100 ° to 200 °C.

The softening temperature (TMA) of the copolymer is determined by monitoring thermal deformation behavior of a 1 mm sheet of the copolymer using a thermomechanical analyzer supplied by Du pont. More specifically, a quarzt needle was placed vertically on the sheet under a load of 49 g and the assembly heated at a rate of 5°C./min. The temperature at which the needle penetrated into the sheet by a depth of 0.635mm was taken as the softening temperature of the copolymer.

The copolymer typically has a glass transition temperature (Tg) of from 50° to 230°C, and preferably from 70° to 210°C.

The crystallinity of the copolymer, as measured by X-ray diffractomery , is normally from 0 to 10 %, preferably from 0 to 7 %, and more preferably from 0 to 5 %.

The magnetooptical recording film 3 comprises (i) at least one 3d transition metal, (ii) at least one corrosion resistant metal and (iii) at least one rare earth element.

As the 3d transition metal (i) use may be made of Fe, Co, Ti, V, Cr, Mn, Ni, Cu, and Zn, alone or in combination. The use of Fe and/or Co is particularly preferred.

The 3d transition metal is present in the magnetooptical recording film 3 in an amount of preferably from 20 to 90 atom %, more preferably from 30 to 85 atom %, and the most preferably from 35 to 80 atom %.

The corrosion resistant metal (ii) incorporated into the magnetooptical recording film 3 is effective at enhancing the oxidation resistance of the film. As the corrosion resistant metal use may be made of Pt, Pd, Ti, and Zr, alone or in combination. Of these, Pt, Pd and Ti are preferably used alone or in combination. Especially preferred is the use of Pt and Pd, alone or in combination.

The corrosion resistant metal is present in the magnetooptical recording film 3 in an amount of from 5 to 30 atom %, preferably from 5 to 25 atom %, more preferably from 10 to 25 atom %, and the most preferably from 10 to 20 atom %.

With less than 5 atom % of the corrosion resistant metal, the resistance of the magnetooptical recording film to oxidation is not appreciably improved, and thus, the coercive force of the film tends to change greatly with time, or the Kerr-rotation angle of the film tends to decrease, or the reflectance R of the film tends to be inferior to that of the corresponding film with no added Pt or Pd. On the other hand, if the content of the corrosion resistant metal of the magnetooptical recording medium is in excess of 30 atom %, the Curie point of the film tends to be unduly reduced and frequently becomes lower than ambient temperature.

In addition to the 3d transition metal (i) and the corrosion resistant metal (ii), the magnetooptical recording film 3 contains-at least one rare earth element usually selected from Gd, Tb, Dy, Ho, Er, Tm, Yb, Lu, La, Ce, Pr, Nd, Pm, Sm and Eu. Of these, Gd, Tb, Dy, Ho, Nd, Sm and Pr are preferred.

The rare earth element is present in the magnetooptical recording film 3 in an amount of preferably from 5 to 50 atom %, more preferably from 8 to 45 atom %, and the most preferably from 10 to 40 atom %.

The magnetooptical recording film (I) preferably has the following composition.

### (i) 3d Transition metal

In the magnetooptical recording film recommended herein, Fe or Co or both are contained, and Fe and/or Co is preferably present in the magnetooptical recording film in an amount of at least 40 atom % but not more than 80 atom %, preferably at least 40 atom % but less than 75 atom %, and more preferably at least 40 atom % but not more than 59 atom %.

Further, Fe and/or Co present in the magnetooptical recording film is preferably in such an amount that the Co/(Fe + Co) atom ratio is from 0 to 0.3, preferably from 0 to 0.2, and more preferably from 0.01 to 0.2.

When the amount of Fe and/or Co is in the range of at least 40 atom % but not more than 80 atom %, there is the advantage that the magnetooptical recording film has is excellent oxidation resistance and has an easy axis of magnetization perpendicular to the film.

In this connection, when Co is incorporated into a magnetooptical recording film, there are observed such phenomena as (a) the Curie point of the magnetooptical recording film increases and (b) the Kerr-rotation angle (θk) becomes large. As a result, the recording sensitivity of the magnetooptical recording film can be adjusted by the amount of Co incorporated and, moreover, the carrier level of reproduced signal increases by incorporating Co. In the preferred magnetooptical recording film, the Co/(Fe + Co) atom ratio is from 0 to 0.3, preferably from 0 to 0.2, and more preferably from 0.01 to 0.2.

Magnetooptical recording films compositions represented by Pt₁₃Tb₂₈Fe₅₀Co₉ and Pd₁₄Tb₂₇Fe₅₂Co₇ are recommended.

Specifically, even when a magnetooptical recording film having a composition represented by Pt₁₃Tb₂₈Fe₅₀Co₉, as recommended herein, in which the Co/(Fe + Co) ratio by atom is 0.155, has been irradiated with an increased energy at the time of erasing the information once recorded therein, no change in film properties occurs, and new information can be recorded on the erased recording film with the same C/N value as that prior to the erasion.

Furthermore, with a magnetooptical recording film recommended herein no change in film property will occur even when recording and erasing information are repeatedly performed. For instance, no decrease in C/N ratio is observed even when the recording and erasing operations are performed 100,000 times in a magnetooptical recording film having the composition of Pt₁₃Tb₂₈Fe₅₀Co₉.

### (ii) Corrosion resistant metal

Preferred magnetooptical recording films contain Pt and/or Pd as a corrosion resistant metal. The amount of Pt and/or Pd contained in the magnetooptical recording films is from 5 to 30 atom %, preferably more than 10 atom % but not more than 30 atom %, more preferably more than 10 atom % but less than 20 atom %, and the most preferably at least 11 atom % but not more than 19 atom %.

The presence in the magnetooptical recording film of Pt and/or Pd in an amount of at least 5 atom %, particularly in excess of 10 atom %, is advantageous in that the oxidation resistance to of the recording film is excellent, and even when it is used for a prolonged period of time, no pit corrosion occurs and the C/N ratio does not become low.

For instance, the C/N ratio of a magnetooptical recording film having a composition represented by Pt₁₃Tb₂₈Fe₅₀Co₉ or Pd₁₂Tb₂₈Fe₅₃Co₇ will not change at all, even when it is kept under conditions of 85% RH and 80°C for 1000 hours. In contrast thereto, the C/N ratio of a magnetooptical recording film having a composition represented by Tb₂₅Fe₆₈Co₇ containing no Pt or Pd will decrease greatly when it is kept for 1000 hours under conditions of 85% RH and 80°C.

By incorporation into a magnetooptical recording film of Pt and/or Pd in an amount within the range as specified above, a sufficiently high C/N ratio can be obtained even by a small bias magnetic field when information is recorded on the magnetooptical recording film or when information recorded is read therefrom. If a sufficiently high C/N ratio is obtained by a small bias magnetic field, the magnet for producing the bias magnetic field can be made small and, moreover, heat generation from the magnet can be inhibited and hence simplification of the driving device for an optical disc bearing the magnetooptical recording film is made possible. Moreover, because a sufficiently large C/N ratio is obtained by a small bias magnetic field, it becomes easy to design a magnet for magnetic field modulation recording capable of overwrite.

### (iii) Rare earth element (RE)

The magnetooptical recording film, contains at least one rare earth element (RE) alone or in combination.

Of the rare earth elements illustrated above, particularly preferred are Nd, Pr, Gd, Tb and Dy, more particularly preferred is Tb. The rare earth elements may be used in combination of two or more, and in this case the combination preferably contains at least 50 atom % of Tb.

From the standpoint of obtaining an optical magnetism having an easy axis of magnetization perpendicular to the film, it is preferable that the rare earth element is present in the magnetooptical recording film in such an amount as 0.15 ≦ x ≦ 0.45, preferably 0.20 ≦ x ≦ 0.4, wherein x represents the atomic ratio RE/(RE + FE + Co).

In the present invention, it is also possible to improve Curie temperature, compensation temperature, coercive force Hc or Kerr-rotation angle θk, or reduce the cost of production by incorporating various elements into the magnetooptical recording films. These elements for the purpose intended may be used, for example, in a proportion of less than 10 atom % based on the total number of atoms of elements constituting the recording film.

Examples of useful elements for this purpose other than those constituents of the magnetooptical recording film include such elements as mentioned below.
(I) 3d transition elements other than Fe and Co, such as Sc, Ti, V, Cr, Mn, Ni, Cu and Zn. Of these elements Ti, Ni, Cu and Zn are preferably used.
(II) 4d transition elements other than Pd such as Y, Zr, Nb, Mo, Tc, Ru, Rh, Ag and Cd. Of these Zr and Nb are preferably used.
(III) 5d transition elements other than Pt such as Hf, Ta, W, Re, Os, Ir, Au and Hg. Of these elements Ta is preferably used.
(IV) Group III B elements such as B, Al, Ga, In, and Tl. Of these B, Al and Ga are preferably used.
(V) Group IV B elements such as C, Si, Ge, Sn and Pb. Of these elements Si, Ge, Sn and Pb are preferably used.
(VI) Group V B elements such as N, P, As, Sb and Bi. Of these elements Sb is preferably used.
(VII) Group VI B elements such as S, Se, Te and Po. Of these elements Te is preferably used.

It has been confirmed by braod angle X-ray diffractometry that the magnetooptical recording films having a composition described above have an easy axis of magnetization perpendicular to the film plane and that many of them may be an amorphous thin film which exhibits a Kerr hysteresis of a good angular loop, indicating that it is perpendicularly magnetizable and capable of magnetooptical recording.

By "Kerr hysteresis of a good angular loop" used herein we mean that the ratio θk₂/θk₁ is at least 0.8 wherein θk₁ is the saturated Kerr-rotation angle, that is the Kerr-rotation angle where the external magnetic field is maximum, and θk₂ is the residual Kerr-rotation angle, that is the Kerr-rotation angle where the external magnetic field is zero.

The magnetooptical recording film 3 preferably has such a thickness that it has a light transmission of at least 5 % in the absence of the reflection film 4. Specifically the thickness of the magnetooptical recording film 3 is normally from 100 to 600 Å, preferably from 100 to 400 Å, and more preferably from 150 to 300 Å.

### Reflection film

The magnetooptical recording medium 1 according to the invention is provided with a reflection film 4 on the magnetooptical recording film 3. The reflection film 4 is composed of a metal or alloy having a thermal conductivity of not higher than 2 J/cm.sec.K, preferably not higher than 1 J/cm.sec.K. Preferably the reflection film 4 is composed of a metal or alloy having a reflectance of at least 50 %, preferably at least 70 %, and a thermal conductivity of not higher than 2J/cm.sec.K, preferably not higher than 1 J/cm.sec.K.

Suitable materials for constituting the reflection film 4 include, for example, Pt having a thermal
conductivity of 0.71 J/cm.sec.K., Pd having a thermal
conductivity of 0.76 J/cm.sec.K., Ti having a thermal
conductivity of 0.71 J/cm.sec.K., Co having a thermal
conductivity of 0.99 J/cm.sec.K., and Zr having a thermal
conductivity of 0.23 J/cm.sec.K., and alloys thereof.

Preferably the reflection film 4 is composed of a nickel alloy having a reflectance of at least 50 %, preferably at least 70 %, and a thermal conductivity of not higher than 2 J/cm.sec.K, preferably not higher than 1 J/cm.sec.K.

Suitable nickel alloys for constituting the reflection film 4 preferably comprise nickel as the primary component and at least one alloying metal selected from the group consisting of silicon, molybdenum, iron, chromium and copper. Such nickel alloys contain nickel in an amount of from 30 to 99 atom %, preferably from 50 to 90 atom %.

Examples of the nickel alloys usable herein to constitute the reflection film include, for example,
Ni-Cr alloys (for example, an alloy of 30-99 atom % of Ni and 1-70 atom % of Cr, preferably an alloy of 70-95 atom % of Ni and 5-30 atom % of Cr),
Ni-Si alloys (for example, an alloy of 85 atom % of Ni, 10 atom % of Si, 3 atom % of Cu and 2 atom % of Al).
Ni-Cu alloys (for example, an alloy of 63 atom % of Ni, 29-30 atom % of Cu, 0.9-2 atom % of Fe, 0.1-4 atom % of Si and 0-2.75 atom % of Al).
Ni-Mo-Fe alloys (for example, an alloy of 60-65 atom % of Ni, 25-35 atom % of Mo and 5 atom % of Fe.),
Ni-Mo-Fe-Cr alloys (for example, an alloy of 55-60 atom % of Ni, 15-20 atom % of Mo, 6 atom % of Fe, 12-16 atom % of Cr, and 5 atom % of W.),
Ni-Mo-Fe-Cr-Cu alloys (for example, an alloy of 60 atom % of Ni, 5 atom % of Mo, 8 atom % of Fe, 21 atom % of Cr, 3 atom % of Cu, 1 atom % of Si, 1 atom % of Mn, and 1 atom % of W; and an alloy of 44-47 atom % of Ni, 5.5-7.5 atom % of Mo, 21-23 atom % of Cr, 0.15 atom % of Cu, 1 atom % of Si, 1-2 atom % of Mn, 2.5 atom % of Co, 1 atom % of W, 1.7-2.5 atom % of Nb, and a balance of Fe),
Ni-Cr-Cu-Mo alloys (for example, an alloy of 56-57 atom % of Ni, 23-24 atom % of Cr, 8 atom % of Cu, 4 atom % of Mo, 2 atom % of W, and 1 atom % of Si or Mn),
Ni-Cr-Fe ailoys (for example, an alloy of 79.5 atom % of Ni, 13 atom % of Cu, 6.5 atom % of Fe and 0.2 atom % of Cu; and an alloy of 30-34 atom % of Ni, 19-22 atom % of Cr, 0.5 atom % of Cu, 1 atom % of Si, 1.5 atom % of Mn and a balance of Fe),

Preferably the reflection film comprises a nickel-chromina or nickel-copper alloy.

When compared with a magnetooptical recording film having a reflection film comprising aluminum, copper or gold, a magnetooptical recording film having a reflection film described herein has an excellent C/N ratio.

In fact, when a magnetooptical recording film having a reflection film composed of a metal such as aluminum having an increased thermal conductivity, is irradiated with a laser beam to form pits in the film, heat energies from the laser beam are conducted to the reflection film and diffused. As a result, increased recording laser power is required; larger and irregular pits are formed in the film; and the dependency of the recording power upon the thickness of the reflection film becomes larger.

Further, the reflection film proposed herein serves to enhance the oxidation resistance of the magnetooptical recording film, and thus, provides a magnetooptical recording medium capable of maintaining excellent reliability for a prolonged period of time.

Preferred reflection films comprise a nickel alloy having a thermal conductivity of not higher than 2J/cm.sec.K, preferaly not higher than 1J/cm.sec.K. particularly preferred from the view point of a high C/N ratio are reflection films composed of a Ni-Cr alloy comprising 30-99 atom % of Ni and 1-70 atom % of Cr, in particular 70-95 atom % of Ni and 5-30 atom % of Cr.

When a reflection film composed of a metal or alloy, in particular a nickel alloy having a reduced thermal conductivity and an increased reflectance, is used according to the invention, a large Kerr-rotation angle and a higher reflectance can be realized even with a thinner magnetooptical recording film.

The thickness of the relection film 4 is normally from 100 to 4000 Å, preferably from 200 to 2000 Å (i.e. 20 to 200 mm).

The total thickness of the magnetooptical recording film 3 and the reflection film 4 is normally form 300 to 4600 Å, and preferably from 350 to 2400 Å.

The enhancing film 5 serves to enhance the sensitivity of the magnetooptical recording medium 1 according to the invention and also serves to protect the magnetooptical recording film 3. The enhancing film is a transparent film having a refractive index larger than that of the substrate. The enhancing film is composed of ZnS, ZnSe, CdS, Si₃N₄, SiNx, (0 < x < 4/3), Si and AlN. Of these, Si₃N₄ and SiNx are preferred from the stand point of anti-crack properties. The thickness of the enhancing film is normally from 100 to 1000 Å, and preferably from 300 to 850 Å.

A process for preparing the magnetooptical recording medium according to the invention is illustrated hereinafter.

The magnetooptical recording medium may be prepared by depositing a magnetooptical recording film having a predetermined composition on a substrate by a known sputtering process or electron beam evaporation process, wherein the substrate is maintained at about room temperature, and use is made of a composite target with chips of elements constituting the magnetooptical recording film in the predetermined proportions or an alloy target having the predetermined composition. The substrate may be fixed, or may rotates on its axis or may rotates on its axis while revolving. A reflection film is then formed on the so deposited magnetooptical recording film by the similar procedure.

The magnetooptical recording medium as illustrated above may be prepared at room temperature, and the magnetooptical recording film as formed are not always in need of such a heat treatment as annealing for the pupose allowing the magnetooptical recording film to have an easy axis of magnetization perpendicular to the film.

If necessary, in this connection, an amorphous alloy thin film can also be formed on a substrate while heating the substrate to 50-600°C, or while cooling the substrate to -50°C.

At the time of sputtering, moreover, biasing a substrate is also possible so that the substrate comes to have a negative potential. By doing so, ions of an inert gas such as argon accelerated in the electric field will hit not only target substances but also a magnetooptical recording film being formed and consequently a magnetooptical recording film having further enhanced characteristics may be frequently obtained.

The magnetooptical recording medium according to the invention has excellent oxidation resistance, and in consequence, it is advantageous in that the magnetooptical recording film can be thin; warping of the medium and film cracking are not liable to occur; it has a high C/N ratio; in addition to excellent magnetooptical characteristics its coercive force and Kerr-rotation angle do not substantially change with time; and it has an increased reflectance.

The invention will be further described by the following examples. In the following examples and comparative examples, a Hsat value of the minimum bias magnetic filed of each magnetooptical recording film is shown, at which the C/N ratio is saturated. The smaller is this Hsat value, it follows that the C/N ratio is saturated by a small bias magnetic field.

### Example 1

A magnetooptical disc was produced by successively laminating on a disc substrate of an ethylene/ tetracyclododecene copolymer having an ethylene content of 60% by mole, a tetracyclododecene content of 40 % by mole, a softening temperature (TMA) of 155 °C., an intrinsic viscosity [η] of 0.45 dl/g and a crystallinity of 0 % as measured by X-ray diffractometry, according to the sputtering process a film of ZnS having a thickness of 600 Å as an enhancement layer, a film of Pt₂₀ Tb₃₂ Fe₃₆ Co₁₂ having a thickness of 200 Å as a magnetooptical recording layer, and a film of Ti having a thickness of 200 Å as a reflective layer.

Record reproducing characteristics of the disc thus obtained were measured at a recording frequency of 1 MHz (duty ratio 50 %) and a linear velocity of 11 m/sec. As the result, the optimum recording laser power was 3.0 mW and C/N was 42 dB (reproducing laser power was 1.0 mW).

### Comparative Example 1

A magnetooptical disc was produced by successively laminating using a sputerring process on the same disc substrate as used in Example 1 a film of ZnS having a thickness of 600 Å as an enhancement layer, a film of Pt₂₀ Tb₃₂ Fe₃₆ Co₁₂ having a thickness of 200 Å as a magnetooptical recording layer, and a film of Al (heat conductivity 2.37 J/cm.sec.K) having a thickness of 200 Å as a reflective layer.

Evaluation of the disc thus obtained was conducted in the same manner as in Example 1, whereupon the optimum recording laser power was 6.2 mW and C/N was 42 dB.

Making a comparison between Example 1 and Comparative Example 1, it is understood that the laser power necessary for recording in the latter example is more than two times that in the former example, even though the values of C/N obtained in both examples are at the same level.

### Example 2

Example 1 was repeated except that the film of Ti used had a thickness of 400 Å. As the result, the optimum laser power was 3.1 mW and C/N was 44 dB.

### Comparative Example 2

Comparative Example 1 was repeatd except that the film of Al used had a thickness of 400 Å. As a result, no recording could be performed even when the laser power was increased up to 8.0 mW.

As can be seen from Examples 1 and 2, and Comparative Examples 1 and 2, in the discs having a construction falling within the scope of the present invention the recording laser power does not practically change with the thickness of the reflective layer used, whereas in the discs having an aluminium reflective layer the recording laser power changes greatly depending upon the thickness of the reflective layer used.

### Example 3

Example 1 was repeated except that the magnetooptical recording layer used had a composition of Pt₂₀ Tb₃₂ Fe₂₆ Co₂₂. As a result, the optimum laser power was 3.9 mW and C/N was 44 dB.

### Example 4

Example 1 was repeated except that the magnetooptical recording layer used had a composition of Pt₂₀ Tb₃₂ Fe₂₂ Co₂₆. As a result, the optimum recording laser power was 5.8 mW, and C/N was 46 dB.

### Example 5

Example 1 was repeated except that a film of Pt having a thickness of 200 A was used as the reflective layer. As a result, the optimum recording laser power was 3.5 mW and C/N was 45 dB.

### Example 6

Example 1 was repeated except that a film of Pt having a thickness of 400 Å was used as the reflective layer.

### Example 7

Example 1 was repeated except that a film of Pd having a thickness of 200 Å was used as the reflective layer. As a result, the optimum recording laser power was 3.5 mW and C/N was 45 dB.

### Example 8

A magnetooptical disc was produced by successively laminating using a sputtering process on the same disc substrate as used in Example 1 a film of SiNx having a thickness of 700 Å as an enhancement layer, a film of Pt₁₈ Tb₃₄ Fe₃₈ Co₁₀ having a thickness of 300 Å as a magnetooptical recording layer, and a film of Ni₈₀ Cr₂₀ having a thickness of 700 Å as a reflective layer.

Record reproducing characteristics of the disc thus obtained were measured at a recording frequency of 1 MHz (duty ratio 50 %) and a linear velocity of 5.4 m/sec.

As a result, the optimum recording laser power was 3.5 mW and C/N was 50 dB (reproducing laser power was 1.0 mW).

### Examples 9-14 and Comparative Example 3-4

Following substantially the same procedure as described in Example 8, there were produced magnetooptical discs, whose magnetooptical layer and reflective layer had the composition and thickness as indicated in Table 5. The discs thus obtained were evaluated in the same manner as in Example 8 to obtain the results as shown in Table 5.

### Example 15

A magnetooptical disc was produced by successively laminating using a sputtering process on a disc substrate of the same ethylene/tetracyclododecene copolymer (60 mole % of ethylene and 40 mole % tetracyclododecene )as used in Example 1 a film of SiNx (0<x<4/3, n = 2.3 and attenuation constant k=0.014) having a thickness of 600 Å as an enhancing layer, a film of Pt₁₃ Tb₂₈ Fe₅₃ Co₆ having a thickness of 300 A as a magnetooptical recording layer, and a film of Ni₉₃ Cr₇ having a thickness of 2000 A as a reflection layer.

Similar discs were also produced with varied NiCr composition in the reflection layer.

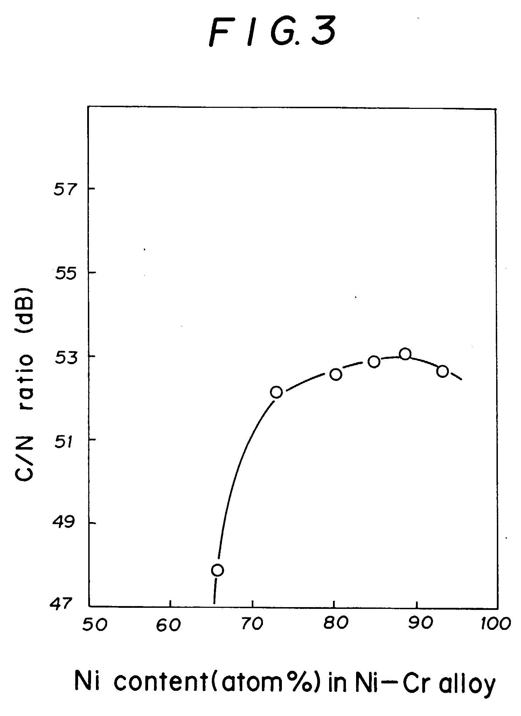

The magnetooptical discs so produced were tested for the C/N ratio (dB). The results are shown in Fig. 3.

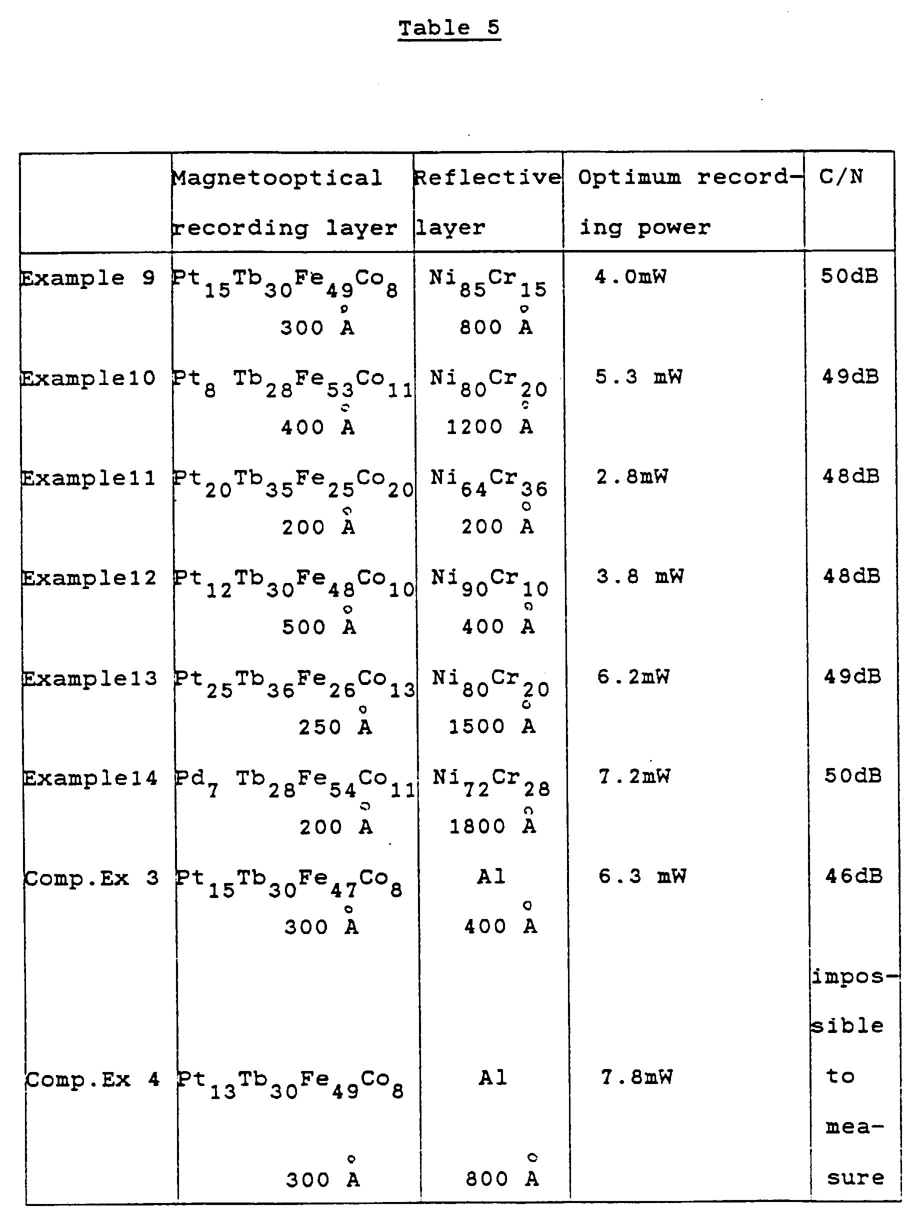

Magnetooptical recording media prepared in the following examples were evaluated in the manner mentioned below.

### (1) Measurement of optical elasticity constant

Using a transmission type ellipsometer with a helium neon laser light source of a wavelength of 632.8 nm, the birefringence of test specimens, 10 x 10 x 0.5 mm, molded from polymers shown in Table 2 by press molding was measured, when no load was placed on the specimen and when stress was applied to the specimen by suspending a weight of 50 g, 100 g or 200 g therefrom. The optical elasticity constant of the specimen was obtained from the relation between the double refractive index obtained and stress applied.

### (2) Letterzation (double path)

Letterzation was obtained from the equation (birefringence at the time of placing no load x thickness of the test speciment) x 2.

### <Referential Example 1>

The photoelasticity constant was measured in an ethylene/tetracyclododecene 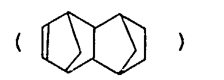 copolymer containing 60 mol % of ethylene (by means of ¹³C-NMR, it was confirmed that tetracyclododecene in the copolymer had a structure of 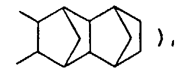 polymethyl methacrylate (T10-10, a product of a Kyowa Gas Kagaku Kogyo) and polycarbonate (AD-5503, a product of Teijin Kasei), both of which are starting polymers for conventional opticaldiscs.

Furthermore, letterzation (double path) of the test specimens molded into the form of a disc was measured at a distance of radius r mm from the center of the specimen at the time when the angle of illumination of the laser was shifted diagonally 10° by 10°, assuming the vertical direction as 0°.

The results obtained are shown in Table 6.

**Table 6**

| Polymer | Optical Elasticity constant | Letterzation (double path) | | | | | |
|---|---|---|---|---|---|---|---|
| | | r | 0^{o} | 10^{o} | 20^{o} | 30^{o} | 40^{o} |
| Ethylene/tetracyclododecene copolymer | -6x10⁻⁷ | 27 | +18 | +18 | +19 | + 19 | + 20 |
| | | 43 | +13 | +14 | +15 | + 15 | + 17 |
| | | 58 | + 7 | + 8 | + 8 | + 9 | + 10 |

As is understood from the results in Table 6, it is expected that because of its small opticalelasticity constant, the ethylene/tetracyclodecene copolymer does not practically exhibit optical influences even when the polymer is molded into a substrate under such molding conditions as injection molding where residual stress is created. Further, the disc made of this copolymer exhibits a substantially constant birefringence even when the angle of incidence of the laser beam changes. In addition, when compared with other discs, the disc made of the above-mentioned copolymer exhibits good adhesion to the enhancing film.

### <Referential Example 2>

On the ethylene/tetracyclododecene copolymer of Referential Example 1 were formed films each containing a compound selected from among various compounds indicated in Table 7 for forming the enhancing layer, and the film-forming speed as measured at that time in each case was as shown in Table 7.

**Table 7**

| | Film-forming speed (50 W,1 min) | | | Reflactive index |
|---|---|---|---|---|
| | 200 | 400 | 600 Å | |
| SiO₂ | **** | | | 1.45 |
| | **** | | | 1.85 |
| ZnO | *********** | | | 2.0 |
| ITO | ************* | | | 2.0 |
| TiO | *** | | | 2.3 |
| Si₃N₄ | *** | | | 2.0 |
| AIN | *** | | | 2.25 |
| ZnSe | ******************************* | | | 2.58 |
| CdS | *************************************** | | | 2.6 |

As is clearly seen from the results in Table 7, ZnSe and CdS are markedly high in film-forming speed and hence they are particularly excellent from the standpoint of productivity.

### Examples 16-21

Disc substrates of 130 mm in diameter were molded respectively from the ethylene/tetracyclododecene copolymer (PO), which were used in Referential Example 1. On each substrate thus molded was successively formed by a sputtering process a film of each compound as shown in Table 8 to a thickness of 500 Å as an enhancing layer, a magnetooptical recording layer comprising TbFe to a thickness of 1000 Å, and an enhancing layer to a thickness of 500 Å.

The mangetooptical recording media thus obtained were allowed to stand for 7 days at 70 °C and 85 % RH, subjected to a 7-day heat cycle test wherein the media were allowed to stand alternately at -20°C for 2 hours and at +60 °C for 2 hours and the coercive force (Hc) thereof measured.

The results obtained are shown in Table 8.

**Table 8**

| Example | Magnetooptical recording medium | | Change in Hc(Koe) | |
|---|---|---|---|---|
| | Substrate | Interlayer | 70^{o}C, 85% RH | Heat cycle |
| 16 | PO | Si₃N₄ | No change | No change |
| 17 | PO | CdS | No change | No change |
| 18 | PO | ZnSe | No change | No change |
| 19 | PO | ZnS | No change | No change |
| 20 | PO | Si | No change | No change |
| 21 | PO | AIN | No change | No change |

As is clearly understood from the results in Table 8, the magnetooptical recording media of the present invention maintain the initial coercive force quite stably.

## Claims

1. A magnetooptical recording medium comprising a substrate, a magnetooptical recording film (I) and a reflection film (II), the recording and reflection films being provided on the substrate in this order, and an enhancing film between the substrate and the magnetooptical recording film (I) and/or between the magnetooptical recording film (I) and the reflection film (II), wherein:
the magnetooptical recording film (I) is a thin film of an amorphous alloy comprising (i) at least one 3d transition metal, (ii) from 5 to 30 atom % of at least one corrosion resistant metal and (iii) at least one rare earth element, and has an easy axis of magnetization perpendicular to the plane of the film;
the reflection film (II) comprises a metal or alloy having a thermal conductivity of not higher than 2 J/cm.sec.K;
the substrate comprises a random copolymer of ethylene and at least one cycloolefin of the general formula [I] or [II] 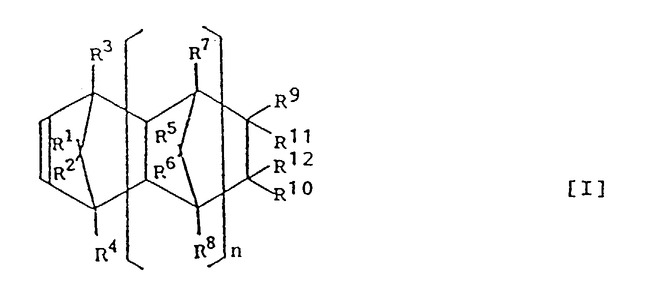 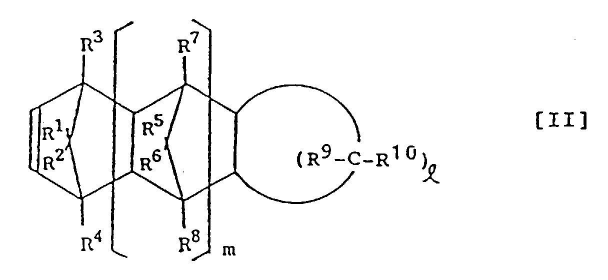
in which n and m each are 0 or a positive integer, ℓ is an integer of at least 3 and R¹ through R¹² each represents a hydrogen or halogen atom or a hydrocarbon group, the copolymer having an intrinsic viscosity [η] of from 0.05 to 10 dl/g, as measured in decalin at a temperature of 135°C, and a softening temperature of at least 70°C; and
wherein the enhancing film comprises ZnS, ZnSe, CdS, Si₃N₄, SiNₓ (wherein 0 < x < 4/3), Si₃N₄, Si or AlN

2. A magnetooptical recording medium according to claim 1, wherein the 3d transition metal (i) is Fe and/or Co.

3. A magnetooptical recording medium according to claim 1 or 2, wherein the corrosion resistant metal (ii) is Pt and/or Pd.

4. A magnetooptical recording medium according to claim 1, 2 or 3, wherein the rare earth element (iii) is selected from Nd, Sm, Pr, Ce, Eu, Gd, Tb, Dy, Ho, Er, Tm, Yb, La, Lu and Pm.

5. A magnetooptical recording medium according to any one of the preceding claims, wherein the magnetooptical recording film (I) contains from 40 to 80 atom % of 3d transition metal (i) and more than 10 but not more than 30 atom % of corrosion resistant metal (ii).

6. A magnetooptical recording medium according to any of the preceding claims, wherein the reflection film (II) has a reflectance of at least 50%.

7. A magnetooptical recording medium according to claim 6, wherein the reflection film (II) has a thermal conductivity of not higher than 1 J/cm.sec.K. and a reflectance of at least 70%.

8. A magnetooptical recording medium according to any one of the preceding claims, wherein the reflection film (II) comprises a nickel alloy.

9. A magnetooptical recording medium according to claim 8, wherein the reflection film (II) comprises a nickel-chromium or nickel-copper alloy.

10. A magnetooptical recording medium according to claim 9, wherein the nickel-chromium alloy comprises from 70 to 95 atom % of Ni and from 5 to 30 atom % of chromium.

11. A magnetooptical recording medium according to any one of the preceding claims, wherein the reflection film (II) has a thickness of from 100 to 4000Å, and the total thickness of the magnetooptical recording film (I) and the reflection film (II) is from 300 to 4600Å.

12. A magnetooptical recording medium according to any one of the preceding claims, wherein the enhancing film comprises Si₃N₄ or SiNₓ (0 < x < 4/3).

13. A magnetooptical recording medium according to any one of the preceding claims, wherein the reflection film comprises Pd, Ti, Co, Zr or an alloy thereof.

## Patentansprüche

1. Ein magnetooptisches Aufzeichnungsmedium, umfassend ein Substrat, einen magnetooptischen Aufzeichnungsfilm (I) und einen Reflexionsfilme (II), wobei die Aufzeichnungs- und Reflexionsfilme auf dem Substrat in dieser Reihenfolge angeordnet sind, und einen Verstärkungsfilm zwischen dem Substrat und dem magnetooptischen Aufzeichnungsfilm (I) und/oder zwischen dem magnetooptischen Aufzeichnungsfilm (I) und dem Reflexionsfilm (II), worin:
der magnetooptische Aufzeichnungsfilm (I) ein dünner Film einer amorphen Legierung ist, welche (i) wenigstens ein 3d Übergangsmetall, (ii) von 5 bis 30 Atom.% wenigstens eines korrosionsresistenten Metalls und (iii) wenigstens ein Seltene Erden Element umfaßt und eine einfache Magnetisierungsachse senkrecht zur Ebene des Films aufweist;
der Reflexionsfilm (II) ein Metall oder eine Legierung mit einer thermischen Leitfähigkeit von nicht höher als 2 J/cm.sek.K umfaßt;
das Substrat ein statistisches Copolymer von Ethylen und wenigstens einem Cycloolefin der allgemeinen Formel [I] oder [II] umfaßt 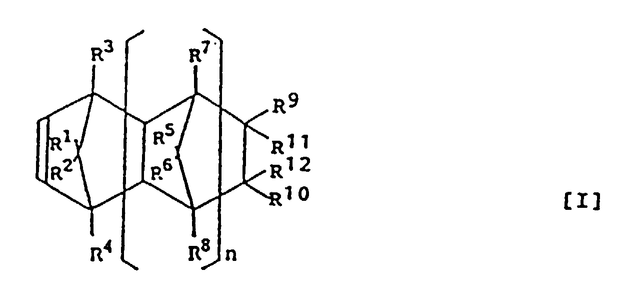 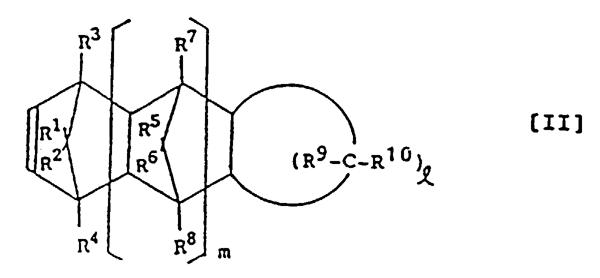 in denen n und m jeweils 0 oder eine positive ganze Zahl sind, 1 eine ganze Zahl von wenigstens 3 ist und R¹ bis R¹² jeweils ein Wasserstoff- oder Halogenatom oder eine Kohlenwasserstoffgruppe darstellen, wobei das Copolymer eine in Decalin bei einer Temperatur von 135°C gemessene intrinsische Viskosität [η] von einschließlich 0,05 bis 10 dl/g und einen Erweichungspunkt von wenigstens 70°C aufweist; und
worin der Verstärkungsfilm ZnS, ZnSe, CdS, Si₃N₄, SiNₓ, (wobei 0 < X < 4/3), Si oder AlN umfaßt.

2. Magnetooptisches Aufzeichnungsmedium nach Anspruch 1, worin das 3d Übergangsmetall (i) Fe und/oder Co ist.

3. Magnetooptisches Aufzeichnungsmedium nach Anspruch 1 oder 2, worin das korrosionsresistente Metall (ii) Pt und/oder Pd ist.

4. Magnetooptisches Aufzeichnungsmedium nach Anspruch 1, 2 oder 3, worin das Seltene Erde Element (iii) aus Nd, Sm, Pr, Ce, Eu, Gd, Tb, Dy, Ho, Er, Tm, Yb, La, Lu und Pm ausgewählt ist.

5. Magnetooptisches Aufzeichnungsmedium nach jedem der vorhergehenden Ansprüche, worin der magnetooptische Aufzeichnungsfilm (I) von 40 bis 60 Atom.% des 3d Übergangsmetalles (i) und mehr als 10 aber nicht mehr als 30 Atom.% des korrosionsresistenten Metalles (ii) enthält.

6. Magnetooptisches Aufzeichnungsmedium nach jedem der vorhergehenden Ansprüche, worin der Reflexionsfilm (II) ein Reflexionsvermögen von wenigstens 50 % besitzt.

7. Magnetooptisches Aufzeichnungsmedium nach Anspruch 6, worin der Reflexionsfilm (2) eine thermische Leitfähigkeit von nicht höher als 1 J/cm.sek.K und ein Reflexionsvermögen von wenigstens 70 % besitzt.

8. Magnetooptisches Aufzeichnungsmedium nach jedem der vorhergehenden Ansprüche, worin der Reflexionsfilm (II) eine Nickellegierung umfaßt.

9. Magnetooptisches Aufzeichnungsmedium nach Anspruch 8, worin der Reflexionsfilm (II) eine Nickel-Chrom- oder Nickel-Kupfer-Legierung umfaßt.

10. Magnetooptisches Aufzeichnungsmedium nach Anspruch 9, worin die Nickel-Chrom-Legierung von 70 bis 95 Atom.% Nickel und von 5 bis 30 Atom.% Chrom umfaßt.

11. Magnetooptisches Aufzeichnungsmedium nach jedem der vorhergehenden Ansprüche, worin der Reflexionsfilm (II) eine Dicke von 100 bis 4000 Å besitzt und die Gesamtdicke des magnetooptischen Aufzeichnungsfilmes (I) und des Reflexionsfilmes (II) von einschließlich 300 bis 4600 Å beträgt.

12. Magnetooptisches Aufzeichnungsmedium nach jedem der vorhergehenden Ansprüche, worin der Verstärkungsfilm Si₃N₄ oder SiNₓ (0 < x < 4/3) umfaßt.

13. Magnetooptisches Aufzeichnungsmedium nach jedem der vorhergehenden Ansprüche, worin der Reflexionsfilm Pd, Ti, Co, Zr oder eine Legierung davon umfaßt.

## Revendications

1. Milieu d'enregistrement magnéto-optique comprenant un support, un film d'enregistrement magnéto-optique (I) et un film de réflexion (II), les films d'enregistrement et de réflexion étant formés sur le substrat dans cet ordre, et un film d'enrichissement entre le support et le film d'enregistrement magnéto-optique (I) et/ou entre le film d'enregistrement magnéto-optique (I) et le film de réflexion (II), dans lequel :
le film d'enregistrement magnéto-optique (I) est un film mince constitué par un alliage amorphe comprenant (i) au moins un métal de la pemière série de transition , (ii) de 5 à 30% en atomes d'au moins un métal résistant à la corrosion et (iii) au moins un élément de terre rare, et il a un axe de facile aimantation perpendiculaire au plan du film ;
le film de réflexion (II) comprend un métal ou alliage présentant une conductivité thermique qui n'est pas supérieure à 2 J/cm. s. K ;
le substrat comprend un copolymère statistique d'éthylène et d'au moins une cyclooléfine de formule générale [I] ou [II] 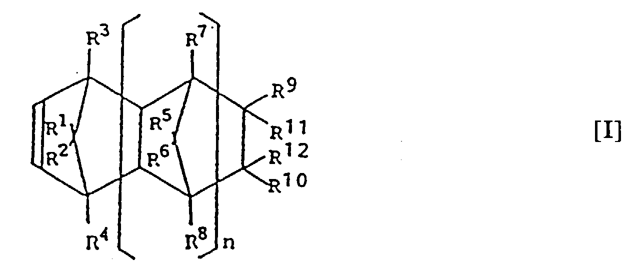 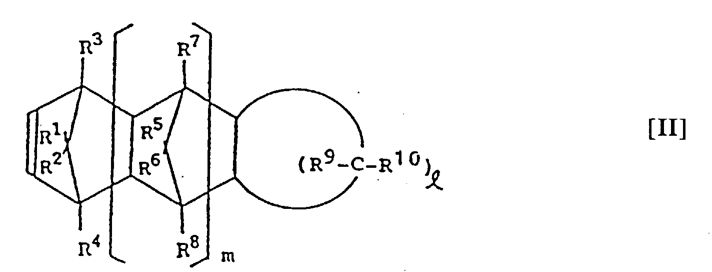 dans lesquelles n et m valent chacun 0 ou un nombre entier positif, ℓ est un nombre entier valant au moins 3 et, les symboles R¹ à R¹²représentent chacun un atome d'halogène ou d'hydrogène ou un groupe hydrocarboné, le copolymère présentant une viscosité intrinsèque [η] de 0,05 à 10 dl/g, telle que mesurée dans la décaline à une température de 135°C, et une température de ramollissement d'au moins 70°C ; et
dans lequel le film d'enrichissement comprend ZnS, ZnSe, CdS, Si₃N₄, SiNₓ (dans laquelle O<x<4/3), Si ou AlN.

2. Milieu d'enregistrement magnéto-optique conforme à la revendication 1, dans lequel le métal de la première série de transition (i) est Fe et/ou Co.

3. Milieu d'enregistrement magnéto-optique conforme à la revendication 1 ou 2, dans lequel le métal résistant à la corrosion (ii) est Pt et/ou Pd.

4. Milieu d'enregistrement magnéto-optique conforme à la revendication 1, 2 ou 3, dans lequel l'élément de terre rare (iii) est choisi parmi Nd, Sm, Pr, Ce, Eu, Gd, Tb, Dy, Ho, Er, Fm, Yb, La, Lu, et Pm.

5. Milieu d'enregistrement magnéto-optique conforme à l'une quelconque des précédentes revendications, dans lequel le film d'enregistrement magnéto-optique (I) contient de 40 à 80% en atomes de métal de la première série de transition (i) et plus de 10% en atomes, mais pas plus de 30% en atomes, de métal résistant à la corrosion (ii).

6. Milieu d'enregistrement magnéto-optique conforme à l'une quelconque des précédentes revendications, dans lequel le film de réflexion (II) a un pouvoir réflecteur d'au moins 50%.

7. Milieu d'enregistrement magnéto-optique conforme à la revendication 6, dans lequel le film de réflexion (II) a une conductivité thermique qui n'est pas supérieure à 1 J/cm. s. K. et un pouvoir réflecteur d'au moins 70%.

8. Milieu d'enregistrement magnéto-optique conforme à l'une quelconque des précédentes revendications, dans lequel le film de réflexion (II) comprend un alliage de nickel.

9. Milieu d'enregistrement magnéto-optique conforme à la revendication 8, dans lequel le film de réflexion (II) comprend un alliage nickel-chrome ou nickel-cuivre.

10. Milieu d'enregistrement magnéto-optique conforme à la revendication 9, dans lequel l'alliage nickel-chrome comprend de 70 à 95% en atomes de Ni et de 5 à 30% en atomes de chrome.

11. Milieu d'enregistrement magnéto-optique conforme à l'une quelconque des précédentes revendications, dans lequel le film de réflexion (II) a une épaisseur de 100 à 4000 Å, et l'épaisseur totale du film d'enregistrement magnéto-optique (I) et du film de réflexion (II) est de 300 à 4600 Å.

12. Milieu d'enregistrement magnéto-optique conforme à l'une quelconque des précédentes revendications, dans lequel le film d'enrichissement comprend Si₃N₄ ou SiNₓ (0<x<4/3).

13. Milieu d'enregistrement magnéto-optique conforme à l'une quelconque des précédentes revendications, dans lequel le film de réflexion comprend Pd, Ti, Co, Zr, ou un alliage de ces derniers.
